# EUROPEAN PATENT SPECIFICATION

(11) **EP 2 162 929 B1**
(45) Date of publication and mention of the grant of the patent: **03.08.2011**
(21) Application number: 07720178.8
(22) Date of filing: 05.06.2007
(51) Int. Cl.: H01L 41/04

(54) **PIEZOELECTRIC SLIP-STICK DRIVE**
PIEZOELEKTRISCHER SLIP-STICK-ANTRIEB
COMMANDE PIÉZOÉLECTRIQUE DE TYPE SLIP-STICK (GLISSÉ-COLLÉ)

(43) Date of publication of application: 17.03.2010
(73) Proprietor: SPECS Zurich GmbH, 8005 Zürich (CH)
(72) Inventor: RYCHEN, Jörg, 8037 Zürich (CH)
(74) Representative: Sutter, Kurt
(86) International application number: PCT/CH2007/000281
(87) International publication number: WO 2008/148224

(56) References cited:
- JP-A- 2003 102 182
- US-A- 5 969 464
- US-A1- 2006 186 758

## Description

### Technical Field

The invention relates to a piezoelectric slip-stick drive and a method for operating such a drive.

### Background Art

Slip-stick drives, also called inertial drives or piezo-drives, comprise a piezoelectric actuator that is first deformed in basically ramp-like manner to move a first member in respect to a second member, whereupon the deformation is reversed quickly in a transition phase, such that a slipping or hopping motion is generated between the two members due to inertia.

In scanning probe microscopy, the coarse positioning of the probe relative to the sample is often accomplished by means of such drives. A slow movement of the actuator is moving the scanning head, and a very fast back movement will make the actuator slip back without moving the head.

In order for such a drive to function properly, voltage ramps of several hundred volts (typically within 10 V to 400 V) and steep edges within microseconds have to be generated. This requires a driver that is able to draw high peak currents from the actuator.

To generate the electronic drive signals for the actuator, different principles have been used:
1) Class A amplifier: Power transistors and a special driving circuit are required. This is a complex and difficult design.
2) High-voltage operational amplifiers: Such amplifiers have limited output currents.
3) Transformer designs: Only suited for dedicated Piezo motors.

US 2006/0186758 describes a slip-stick drive using a bridge circuit with two capacitors and an actuator. Another example is found in US5969464.

### Disclosure of the Invention

Hence, the problem to be solved by the present invention is to provide a piezoelectric slip-stick drive as well as a method for operating such a drive that allow to combine a simple circuit design with fast switching times during the transition phase.

This problem is solved by the drive and method according to the independent claims.

Accordingly, while, in the ramp phase, the piezoelectric actuator is charged with a first charge, a second charge is charged to a capacitor. During the transition phase, a charge transfer between the capacitor and the actuator is initiated by electrically connecting the same, which allows to quickly change the charge on (and therefore the voltage over) the actuator. The voltage step generated in this way will give rise to the "slip" motion of the drive.

Advantageously, and for fully compensating the voltage change during the ramp phase, the second charge is equal to but of opposite sign than the first charge.

The driver according to the present invention comprises two outputs, a first one for applying the voltage over the actuator, and a second one for charging the capacitor. A switch is used for connecting the actuator to the capacitor in the transition phase.

The present invention is particularly suited for positioning applications in scanning probe microscopy.

### Brief Description of the Drawings

The invention will be better understood and objects other than those set forth above will become apparent when consideration is given to the following detailed description thereof. Such description makes reference to the annexed drawings, wherein:
Fig. 1 shows a first embodiment of the invention,
Fig. 2 shows the various voltage traces in the initialization phase, ramp phase and transition phase, and
Fig. 3 shows a second embodiment of the invention.

### Modes for Carrying Out the Invention

### Definitions:

The term "piezoelectric slip-stick drive" is used to designate any drive where a piezoelectric actuator is deformed in cycles, each cycle comprising a ramp phase and a transition phase. In the ramp phase, the actuator is deformed slowly, such that the mechanical system can follow the deformation, while, in the transition phase, the actuator is deformed quickly and oppositely to the deformation in the ramp phase, such that the mechanical system, due to inertia, does not follow the deformation but rather slips or hops along an interface.

In the ramp phase, the change of the voltage over the actuator is generally much slower than during the transition phase. The term "ramp" is used to designate linear as well as non-linear ramps, i.e. ramps that have constant or non-constant slopes.

### First embodiment:

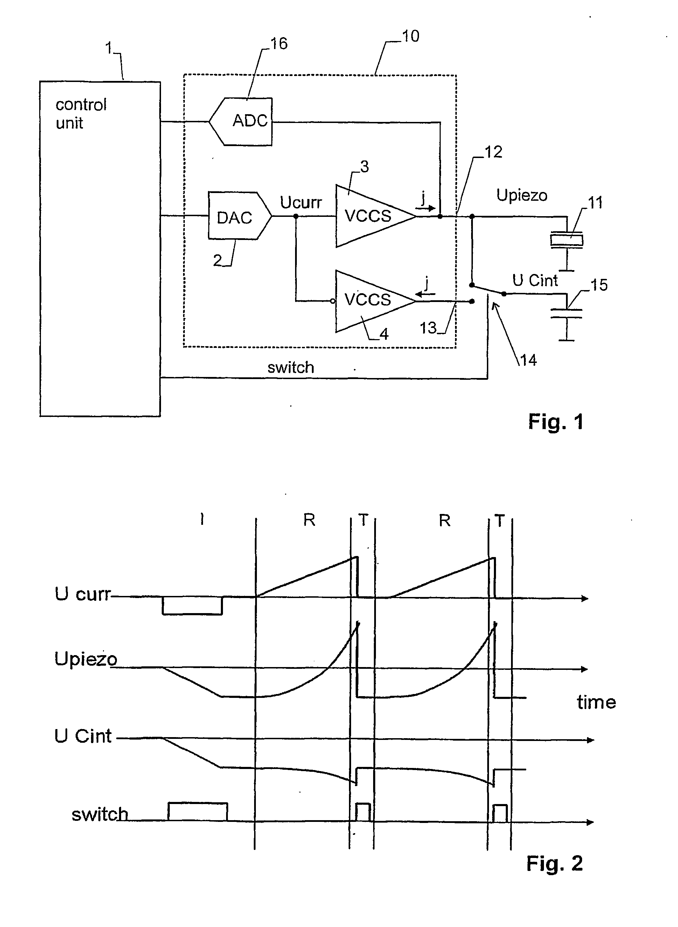

A first embodiment of the invention is illustrated in Fig. 1, which shows a piezoelectric slip-stick drive having a control unit 1, a driver 10 and a piezoelectric actuator 11.

Control unit 1 controls the operation of driver 10. In particular, it controls a digital-analog converter 2 to generate a voltage Ucurr. Voltage Ucurr is fed to a voltage controlled current source (VCCS) 3 generating a current j defined by Ucurr. Also, voltage Ucurr is fed to an inverting current source 4, which generates a current -j. Both voltage controlled current sources are amplifiers having a voltage input and a current output.

The first output 12 of driver 10, namely the output of voltage controlled current source 3, is connected to one terminal of the piezoelectric actuator 11, whose other terminal is at a fixed voltage, such as analog ground. The second output 13 of driver 10, namely the output of voltage controlled current source 4, is connected to a switch 14.

Switch 14 can e.g. be a solid-state relay, a suitable assembly of semiconductor devices, or a mechanical relay. It is a single-pole double-throw switch having two inputs and one output. One input is connected to the non-grounded terminal of actuator 11, and the other to second output 13 of driver 10. The position of the switch can be controlled by control unit 1. The output of switch 14 is connected to one terminal of a capacitor 15, with the other terminal of capacitor 15 being applied to a fixed voltage, such as analog ground.

In the present description and in the claims, switch 14 and capacitor 15 are considered to be functionally separate from driver 10, even though in an actual implementation driver 10, switch 14 and capacitor 15 may form a common unit.

Driver 10 further comprises a measuring device formed by an analog-digital converter 16 that measures the voltage over actuator 11 and feeds the corresponding value back to control unit 1.

The operation of the device of Fig. 1 is illustrated in Fig. 2.

As can be seen, the device is operated in cycles, with each cycle comprising a ramp phase R and a transition phase T as well as an optional initialization phase I.

In ramp phase R, control unit 1 sets switch 14 to connect capacitor 15 to the second output 13. In the present embodiment, it then linearly increases voltage Ucurr, which, in turn, leads to a quadratic increase of the voltage Upiezo over actuator 11 as well as to a quadratic decrease of the voltage U Cint over capacitor 5.

It must be noted, though, in the ramp phase R, the voltage over actuator 11 can also be increased (or decreased) in different manner. For example, Ucurr could be set to a constant value, which would lead to a linear increase or decrease of the voltage Upiezo over actuator 11. Shapes for suitable ramps, which can be programmed into control unit 1, are known to the person skilled in the art.

In any case, in the embodiment of Fig. 1, the charge accumulated over actuator 11 during the ramp phase is substantially equal but opposite to the charge over capacitor 15 because the currents j, -j at the first and second outputs 12 and 13 are equal in magnitude but of opposite sign.

Ramp phase R is followed by transition phase T, where the voltage Upiezo over actuator 11 will have to be decreased quickly. For this purpose, control unit 1 sets Ucurr to zero, thereby bringing the outputs 12 and 13 into high impedance mode. Then it operates switch 14 to connect capacitor 15 to actuator 11, which initiates a charge transfer, which quickly resets the voltage over actuator 11. The rate of the voltage decay in transition phase T is given by the internal resistances of actuator 11, switch 14 and capacitor 15, and can therefore be high.

If the charges that were accumulated in the ramp phase over actuator 11 and capacitor 15 are exactly identical in magnitude but of opposite sign, the voltage at the end of transition phase T will be equal to the one at the beginning of the preceding ramp phase R. Otherwise, a small offset will be observed.

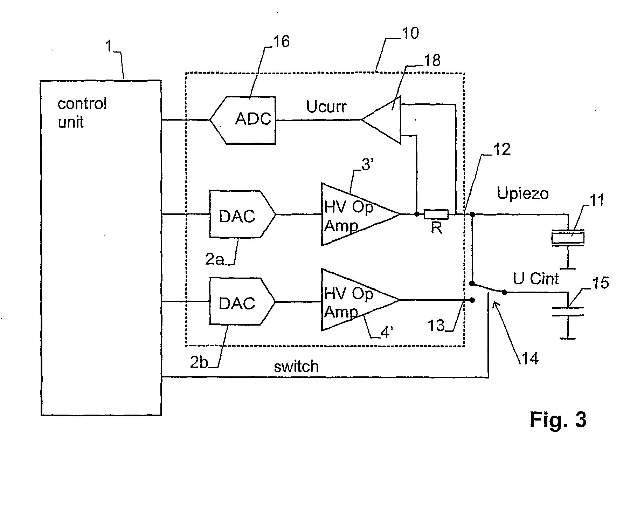

Initialization phases I, as illustrated in Fig. 3, can be provided for compensating such an offset and for applying a predefined voltage over actuator 11 at the beginning of the subsequent ramp phase. In each initialization phase, switch 14 is positioned to connect actuator 11 to capacitor 14. Then, Ucurr is set to non-zero until a desired starting voltage is reached over actuator 11. For this purpose, analog-digital converter 16 can be used to measure the voltage over actuator 11, and control unit 1 can adjust voltage Ucurr until the starting voltage is reached.

In addition to the above, analog-digital converter 16 can be used to determine at least one parameter of the device, such as:
a) the temperature of actuator 11: Since the capacitance of many typical actuators depends on temperature, the charge (= integral of applied current over time) to reach a given voltage, such as the voltage measured by analog-digital converter 16 at the end of the ramp phase, can be used to derive the actuator's temperature;
b) a depolarization of actuator 11: Since the capacitance of an actuator changes when (undesired) depolarization within the actuator takes place, the measured voltage as a function of charge fed to the actuator allows again to determine the presence of a depolarization; or
c) an undesired discharge in actuator 11: A discharge, such as a spark discharge, can be observed e.g. when the voltage measured by analog-digital converter 16 in the ramp phase drops unexpectedly or fails to rise to the expected level.

### Second embodiment:

While the first embodiment allows control unit 1 a direct control of the current fed to the actuator, the second embodiment of Fig. 3 provides a direct control of the voltage. This embodiment uses two high voltage operational amplifiers 3', 4', whose output voltages are proportional to their input voltages. The input voltages of the operational amplifiers are e.g. generated by means of two separate digital analog converters 2a, 2b.

A current sensor 18 measuring the voltage drop over a series resistor R at output 12 is used to measure the current fed to actuator 11. During the ramp phase, knowing the capacitance of capacitor 15, control unit 1 can feed a current of opposite sign and equal magnitude to capacitor 15, such that equal charges of opposite sign are fed to actuator 11 and capacitor 15.

In the initialization phase I, switch 14 is set to connect actuator 11 to capacitor 15, and both the capacitor and the actuator are charged by operational amplifier 3' and first output 12.

Apart from these differences, the embodiment of Fig. 4 works basically in the same manner as the embodiment of Fig. 1.

### General notes:

The initialization phase I can be carried out in each cycle or only in some of the cycles, e.g. at given intervals or when a strong deviation from the desired starting voltage is observed.

It must be noted that the embodiments shown in the figures are not the only possible ways for implemented the present invention. For example, a hybrid of the designs of Figs. 1 and 3 could be used, where an operational amplifier generates the voltage Upiezo, while a voltage-controlled current source feeds current to capacitor 15. The voltage-controlled current source is controlled by control unit 1 to generate the same (but opposite) current as measured by current sensor 18.

Also, a purely analog current mirror instead of a feedback through control unit 1 can be used to ensure that the current to capacitor 15 is equal in magnitude to the one through actuator 11 during the ramp phase R.

Advantageously, the connection from actuator 11 to capacitor 15 through switch 14 is short and has low impedance, which allows to obtain faster switching rates.

It must be noted that the amplifiers in driver 10, namely the VCCS 3, 4 or the operational amplifiers 3', 4', are not required to handle the high currents of the transition phase. Rather, these high currents are handled by switch 14. Hence, the present design allows to use simpler amplifiers than conventional designs.

While there are shown and described presently preferred embodiments of the invention, it is to be distinctly understood that the invention is not limited thereto but may be otherwise variously embodied and practiced within the scope of the following claims.

## Claims

1. A piezoelectric slip-stick drive comprising at least one piezoelectric actuator (11) and at least one driver (10) for applying a voltage to said actuator (11), wherein said driver (10) is adapted to operate said actuator (11) in cycles, each cycle comprising a ramp phase (R) and a transition phase (T), wherein, in said ramp phase (R) a voltage over said actuator (11) varies much more slowly than in said transition phase (T), wherein said drive comprises
a capacitor (15) and
a switch (14) operatable for connecting said capacitor (15) to said actuator (11), thereby initiating a charge transfer between said actuator (11) and said capacitor (15) for generating said transition phase (T),
and wherein said driver (10) comprises
a first output (12) for applying said voltage over said actuator (11) during said ramp phase (R) and
a second output (13) for charging said capacitor (15).

2. The drive of claim 1 further comprising a first amplifier (3, 3') connected to said first output (12) and a second amplifier (4, 4') connected to said second output (13).

3. The drive of any of the claims 1 or 2 wherein, during said ramp phase (R), a current through said first output (12) is opposite to a current through said second output (13).

4. The drive of any of the preceding claims further comprising a measuring device (16, 18, R) measuring a current through said actuator (11) or a voltage over said actuator (11).

5. The drive of claim 4 comprising a current source (4) connected to said second output (13), wherein, during said ramp phase (R), said current source (4) generates a current equal magnitude as but of opposite sign to the current measured by said measuring device.

6. A method for operating a slip-stick drive comprising at least one actuator (11), wherein said actuator (11) is operated in cycles, each cycle comprising a ramp phase (R) and a transition phase (T), wherein, in said ramp phase (R) a voltage over said actuator (11) varies much more slowly than in said transition phase (T), said method comprising the steps of
during said ramp phase (R), charging said actuator (11) with a first charge and charging a capacitor (15) with a second charge, and
during said transition phase (T), connecting said actuator (11) to said capacitor (15) by operating a switch (14), thereby initiating a charge transfer between said actuator (11) and said capacitor (15) for generating a voltage step over said actuator (11).

7. The method of claim 6 wherein, in said ramp phase (R), said actuator (11) and said capacitor (15) are charged with equal but opposite charges.

8. The method of any of the claims 6 or 7 wherein at least part of said cycles comprise an initialization phase (I) prior to said ramp phase (R), wherein, during at least part of said initialization phase, said actuator (11) and said capacitor (15) are connected and a desired starting voltage is applied over the actuator (11) and the capacitor (15).

9. The method of any of the claims 6 to 8 wherein, during said ramp phase (R), a current that is equal to but opposite to a current fed to said actuator (11) is fed to said capacitor (15).

10. The method of any of the claims 6 to 9 comprising the step of measuring the current through or a voltage over said actuator (11) during said ramp phase (R).

11. The method of claim 10 wherein the measured current through or voltage over said actuator (11) is used to determine at least one parameter from the following group:
a) a temperature of said actuator (11),
b) a depolarization of said actuator (11),
and
c) an undesired discharge in said actuator (11).

12. Use of the drive or the method of any of the preceding claims for positioning applications in scanning probe microscopy.

## Patentansprüche

1. Piezoelektrischer Slip-Stick Antrieb umfassend mindestens einen piezoelektrischen Aktor (11) und mindestens eine Treiberstufe (10) zum Anlegen einer Spannung an den Aktor (11), wobei die Treiberstufe (10) zum Antreiben des Aktors (11) in Zyklen ausgestaltet ist, wobei jeder Zyklus eine Anstiegsphase (R) und eine Übergangsphase (T) umfasst, wobei in der Anstiegsphase (R) eine Spannung über den Aktor (11) viel langsamer als in der Übergangsphase (T) variiert, wobei der Antrieb
einen Kondensator (15) und
einen Schalter (14), welcher zur Verbindung des Kondensators (15) mit dem Aktor (11) betreibbar ist, wodurch er einen Ladungstransfer zwischen dem Aktor (11) und dem Kondensator (15) zur Generierung der Übergangsphase (T) initiiert, umfasst
und wobei die Treiberstufe (10)
einen ersten Ausgang (12) zum Anlegen der Spannung an den Aktor (11) während der Anstiegsphase (R) und
einen zweiten Ausgang (13) zum Laden des Kondensators (15) umfasst.

2. Antrieb nach Anspruch 1, weiter umfassend einen ersten, mit dem ersten Ausgang (12) verbundenen Verstärker (3, 3') und einen zweiten, mit dem zweiten Ausgang (13) verbundenen Verstärker (4, 4').

3. Antrieb nach Anspruch 1 oder 2, wobei in der Anstiegsphase (R) ein Strom durch den ersten Ausgang (12) entgegengesetzt zu einem Strom durch den zweiten Ausgang (13) ist.

4. Antrieb nach einem der vorangehenden Ansprüche, weiter umfassend eine Messvorrichtung (16, 18, R), welche einen Strom durch den Aktor (11) oder eine Spannung am Aktor (11) misst.

5. Antrieb nach Anspruch 4, umfassend eine Stromquelle (4), welche mit dem zweiten Ausgang (13) verbunden ist, wobei die Stromquelle (4) in der Anstiegsphase (R) einen Strom mit einer gleichen Amplitude wie aber mit einem entgegengesetzten Vorzeichen als der von der Messvorrichtung gemessene Strom generiert.

6. Verfahren zum Betreiben eines Slip-Stick Antriebs umfassend mindestens einen Aktor (11), wobei der Aktor (11) in Zyklen betrieben wird, wobei jeder Zyklus eine Anstiegsphase (R) und eine Übergangsphase (T) umfasst, wobei in der Anstiegsphase (R) eine Spannung am Aktor (11) viel langsamer als in der Übergangsphase (T) variiert, wobei das Verfahren die Schritte:
Laden des Aktors (11) in der Anstiegsphase (R) mit einer ersten Ladung und Laden eines Kondensators (15) mit einer zweiten Ladung, und
Verbinden des Aktors (11) in der Übergangsphase mit dem Kondensator (15) durch das Steuern des Schalters (14), wodurch ein Ladungstransfer zwischen dem Aktor (11) und dem Kondensator (15) zur Generierung einer Spannungsstufe am Aktor (11) initiiert wird,
umfasst.

7. Verfahren nach Anspruch 6, wobei der Aktor (11) und der Kondensator (15) in der Anstiegsphase (R) mit gleichen aber entgegengesetzten Ladungen geladen wird.

8. Verfahren nach einem der Ansprüche 6 oder 7, wobei mindestens ein Teil der Zyklen eine Initialisierungsphase (I) vor der Anstiegsphase (R) umfasst, wobei während mindestens eines Teils der Initialisierungsphase der Aktor (11) und der Kondensator (15) verbunden sind und eine gewünschte Anfangsspannung an den Aktor (11) und den Kondensator (15) angelegt wird.

9. Verfahren nach einem der Ansprüche 6 bis 8, wobei in der Anstiegsphase (R) ein Strom, welcher gleich mit aber entgegengesetzt zu einem in den Aktor (11) eingespeisten Strom ist, in den Kondensator (15) eingespeist wird.

10. Verfahren nach einem der Ansprüche 6 bis 9, umfassend den Schritt der Messung des Stroms durch den Aktor (11) oder der Spannung am Aktor (11) in der Anstiegsphase (R).

11. Verfahren nach Anspruch 10, wobei der gemessene Strom durch den Aktor (11) oder die am Aktor (11) gemessene Spannung zur Bestimmung mindestens eines Parameters aus folgender Gruppe verwendet wird:
a) eine Temperatur des Aktors (11),
b) eine Depolarisation des Aktors (11), und
c) eine unerwünschte Entladung im Aktor (11).

12. Verwendung des Antriebs oder des Verfahrens nach einem der vorangehenden Ansprüche bei Positionierungsanwendungen in der Rastersondenmikroskopie.

## Revendications

1. Propulseur piézoélectrique collé-glissé comprenant au moins un actionneur piézoélectrique (11) et au moins un driver (10) pour appliquer une tension audit actionneur (11), ledit driver (10) étant adapté pour commander ledit actionneur (11) en cycles, chaque cycle comprenant une phase de montée (R) et une phase de transition (T), une tension aux bornes dudit actionneur (11) variant, dans la phase de montée (R), beaucoup plus lentement que dans la phase de transition (T), le propulseur comprenant
un condensateur (15) et
un commutateur (14) qui peut être commandé pour connecter ledit condensateur (15) audit actionneur (11), par cela commençant un transfert de charge entre ledit actionneur (11) et ledit condensateur (15) pour générer ladite phase de transition (T),
et ledit driver (10) comprenant
une première sortie (12) pour appliquer ladite tension audit actionneur (11) pendant ladite phase de montée (R) et
une deuxième sortie (13) pour charger ledit condensateur (15).

2. Propulseur selon la revendication 1, de plus comprenant un premier amplificateur (3, 3') connecté à ladite première sortie (12) et un deuxième amplificateur (4, 4') connecté à ladite deuxième sortie (13).

3. Propulseur selon l'une des revendications 1 ou 2, un courant à travers de ladite première sortie (12) étant inversé par rapport à un courant à travers de ladite deuxième sortie (13) pendant ladite phase de montée (R).

4. Propulseur selon l'une des revendications précédentes, de plus comprenant un dispositif de mesure (16, 18, R) qui mesure un courant à travers dudit actionneur (11) ou une tension aux bornes dudit actionneur (11).

5. Propulseur selon la revendication 4, comprenant une source de courant (4) connectée à ladite deuxième sortie (13), ladite source de courant (4) générant, pendant la phase de montée (R), un courant avec une magnitude égale mais avec un signe contraire au courant mesuré par ledit dispositif de mesure.

6. Méthode pour l'opération d'un propulseur collé-glissé comprenant au moins un actionneur (11), ledit actionneur (11) étant commandé en cycles, chaque cycle comprenant une phase de montée (R) et une phase de transition (T), une tension dudit actionneur (11) variant, dans la phase de montée (R), beaucoup plus lentement que dans la phase de transition (T), ladite méthode comprenant les étapes de
charger, pendant la phase de montée (R), ledit actionneur (11) avec une première charge et charger un condensateur (15) avec une deuxième charge, et
connecter, pendant la phase de transition, ledit actionneur (11) audit condensateur (15) par la commande d'un commutateur (14), par cela commençant un transfert de charge entre ledit actionneur (11) et ledit condensateur (15) pour générer une tension aux bornes dudit actionneur (11).

7. Méthode selon la revendication 6, ledit actionneur (11) et ledit condensateur (15) étant chargés avec des charges égales mais du signe contraire pendant la phase de montée (R).

8. Méthode selon l'une des revendications 6 ou 7, au moins une partie desdits cycles comprenant une phase d'initialisation (I) avant la phase de montée (R), pendant au moins une partie de ladite phase initialisation ledit actionneur (11) et ledit condensateur (15) étant connectés et une tension initiale désirée étant appliquée aux bornes de l'actionneur (11) et du condensateur (15).

9. Méthode selon l'une des revendications 6 à 8, un courant qui est égale mais du signe contraire à un courant livré audit actionneur (11) étant livré audit condensateur (15) pendant la phase de montée (R).

10. Méthode selon l'une des revendications 6 à 9, comprenant l'étape de mesurer le courant à travers dudit actionneur (11) ou une tension aux bornes dudit actionneur (11) pendant ladite phase de montée (R).

11. Méthode selon la revendication 10, le courant mesuré à travers dudit actionneur (11) ou la tension mesurée aux bornes dudit actionneur (11) étant utilisés pour déterminer au moins un paramètre de la groupe suivants :
a) une température dudit actionneur (11),
b) une dépolarisation dudit actionneur (11), et
c) un déchargement non désiré dans ledit actionneur (11).

12. Utilisation dudit propulseur ou de ladite méthode selon l'une quelconque des revendications précédentes pour applications de positionnement dans le domaine de microscopie à sonde locale.
